# EUROPÄISCHE PATENTANMELDUNG

(11) **EP 0 666 679 A1**
(43) Veröffentlichungstag der Anmeldung: **09.08.1995**
(21) Anmeldenummer: 94830038.9
(22) Anmeldetag: 08.02.1994
(51) Int. Cl.: H04M 11/00, H04M 11/06

(54) **Telephonvorrichtung zur Schallsendung von verschlüsselten Multifrequenztönen**

(71) Anmelder: Zanotti, Riccardo, I-40069 Zola Predosa (IT)
(72) Erfinder: Zanotti, Riccardo, I-40069 Zola Predosa (IT)
(74) Vertreter: Rinaldi, Carlo

(57) **Zusammenfassung**

Die Vorrichtung weist einen telephonischen Anpassungskreis (3) auf, der an das Netz (2) mittels eines Schalters (1) mit zwei Stellungen angeschlossen ist, und einen Multifrequenztonsender (6), der mit einer zentralen Verarbeitungseinheit (7) verbunden ist, welche die von einer Tastatur (9,10) ankommenden ersten Signale verarbeitet, um weitere Signale abzugeben, die auf den ersten Signalen beruhen und die nach einem in einem Speicher (12) enthaltenden Sendungsprotokoll alphanumerischer Typen verarbeitet werden, und um außerdem die verarbeiteten Signale an den Multifrequenztonsender (6) zu schicken, der diese Signale in entsprechende Multifrequenztöne verändert; ein Erkennungskreis (14) empfängt die Sendungsweise der Töne; der Erkennungskreis (14) ist an einem Schalter (8) angeschlossen, der mit einem zweifach verstellbaren Knopf (8a,8b) ausgestattet ist, um von der ersten auf die zweite Art zu schalten; ein Zehnerimpulssender (11) angeschlossen an der Einheit (7) mittels eines Multifrequenzton/Zehnerimpuls-Schalters (13); der Anpassungskreis (3) ist mit einem Lautverstärkungskreis (4) verbunden, der an einem Lautsprecher (5) angeschlossen ist.

## Beschreibung

Die vorliegende Erfindung betrifft eine Vorrichtung, die übliche telephonische Multifrequenztöne in ein Sendungsprotokoll alphanumerischer Typen abändert.

Das Telephon, das zur Schallsendung von Tönen und insbesondere der menschlichen Stimme erfunden und verwendet wurde, wurde im Laufe der letzen Jahre wichtiger Veränderungen unterzogen, wonach es sich dann für die Sendung von Daten und Abbildungen eignete. Diese Anpassung wurde durch die Erneuerungen der telefonischen Netze erreicht; insbesondere ermöglichen die technologisch erneuerten Netze die Verwendung von Sendungs - und Schaltungseinrichtungen, die geeignet sind, eine erhebliche Menge von Daten pro Zeiteinheit zu senden und zu erhalten.

Durch die Verwendung geeigneter Vorrichtungen werden Sendungsprobleme von seiten der Firmen, Banken, Agenturen u.s.w. gelöst.

Die bis jetzt verwendeten Sendungssysteme weisen Nachteile auf, die weitere Anwendungen der Sendungsvorrichtungen im Gebiet Industrie, der Handels und der Dienstleistungen stark begrenzen.

Diese Nachteile sind hauptsächlich folgende:
a- es besteht keine Möglichkeit eines Gesprächs zwischen den Sendungs - und Empfangsvorrichtungen mit unterschiedlichen Sprachen;
b- Notwendigkeit an Fachkräften zum Auslegen der gesendeten Daten und zur Anwendung der Vorrichtungen, die für die Sendungen dienen;
c- die Kosten für die Sendungsvorrichtungen und für die Netze, die für die Anwendung derselben Sendungsvorrichtungen dienen, gestatten keine Massenverkäuflichkeit dieser Vorrichtungen.

Deshalb können die Anfragen von Daten oder von Bestellungen, die Vormerkungen und die Befragungen nur mittels Gespräche zwischen dem Rufer und dem Fachmann der Dienste gestellt werden; so ist es deutlich, daß diese Dienste nur während der Arbeitszeit von Fachmännern ausgeführt werden können. Diese müssen per Hand die Bestellungen des Rufers in den Rechner einzuführen, der nur von Fachmännern verwendet werden kann.

Weitere Erneuerungen sind in der Anwendung von Tonsystemen zu sehen, die mit dem Rufer mittels einer gewöhnlichen Multifrequenzvorrichtung sprechen.

Obgleich es keine Massenverkäuflichkeit der Multifrequenzvorrichtungen gibt, ist es möglich, zahlreiche der folgenden Operationen zu erreichen: Erhaltung von Nachrichten durch ein Zweig-System, Nachwählen eines von einem PABX abgeleiteten Nebenanschlusses, Veränderung des Maßstabs eines Tonfachs des Inhabers, u.s.w.

Die Tonsysteme können an "HOST" angeschlossen werden, damit die Daten fernverarbeitet werden. Deshalb weist das Anwenden von Tonsystemen auf Multifrequenzsendungsapparate keinen der Nachteile auf, die in den Punkten a, b und c aufgezeigt sind. Bei öffentlichen Telephonnetzen besteht eine entsprechende Sprache, die durch die Stimme geleitet nur an das DTMF Signalsystem gebunden ist; die erteilten Anweisungen sind so einfach, daß der Erfolg der Verbindung sicher steht, selbst wenn der Rufer in Telephontechnik unerfahren ist; eine Multifrequenztelephonvorrichtung ist billig (davon abgesehen daß im allgemeinen der von den Telephongesellschaften hergestellte Hauptapparat eine BCA-Multifrequenzvorrichtung ist).

Auf einfache und billige Weise könnte ein Tankwart 24 Stunden lang ohne einen anderen Bediener seinem Bedarf an Normalen, Super - oder bleifreiem Benzin und Öl bei seiner Lieferfirma bestellen, indem er die Telephonnummer des Dienstes mit einem Multifrequenzapparat anruft, das Sprechsystem würde dann z.B. folgende Anweisungen geben:
1- "Automatischer Empfang von Brennstoffbestellungen";
2- "Wählen Sie Ihrer Erkennungskodex";
3- Der Tankwart Giovanni Rossi wählt "12345", d. h. dem ihm zugewesenen Kodex;
4- "Guten Tag Herr Giovanni Rossi" Identifizierungsbestätigung von seiten des Systems;
5- "Wählen Sie die gewünschte Anzahl von Super und drücken Sie auf das Sternzeichen";
6- Herr Rossi wählt "500*" um 500 Liter Super zu bestellen;
7- "500 Liter Super. Zur Bestätigung * drücken; zur Bestellung weiterer Produkte, bitte # drücken";
8- Herr Rossi bestellt die gewünschte Menge weiterer Produkte auf die gleiche Art und Weise.

Dieses Beispiel soll die Möglichkeiten eines Systems zeigen, das als Anpassungsvermittler zwischen einem Rufer, der einen einfacher Multifrequenzapparat besitzt, und einem Rechner beliebiger Komplexität dient; mit ein wenig Phantasie, ist es leicht sich vorzustellen wieviele Anwendungen in den verschiedensten Betrieben und bei den verschiedensten Tätigkeiten möglich sind.

Es bleiben einige Probleme zu lösen um ein System zu erhalten, das jederwelchen Person erlaubt, eine Firma anzurufen mit der bis da noch kein Kontakt bestand, und eine Bestellung aufzugeben, indem man sich mit einem automatischen Sprechsystem in Verbindung setzt, das mit "HOST" verbunden ist, um etwa Mineralwasser, oder ein in Fernsehen reklamisiertes Sonderangebot zu bestellen, oder eine Reise zu buchen, deren Werbung in einem Katalog erschienen ist.

Das erste Problem was zu lösen ist, betrifft die Tatsache, daß bei Multifrequenztonsendungen nur Nummersymbole geschickt werden können, die auf die Telephontastatur dargestellt sind. Das verhindert prinzipiell den Empfang der persönlichen Angaben (Name, Nachname und Adresse) des Rufenden, wenn der Bestelldienst zur Verfügung eines größeren Kundenkreises gestellt werden sollte. Ohne die persönlichen Angaben des Rufers zu kennen, ist es unmöglich ihm Waren zu schicken oder einen gewünschten Dienst zu leisten. Beim Beispiel des Tankwarts, wird nämlich ein Erkennungskodex angerufen und hier wird noch an eine begrenzte Anzahl von Kunden gedacht, mit denen die Kommunikation möglich ist, weil sie den Bestelldienst kennen und dafür eine Vertrag abgeschlossen haben.

Weitere Probleme die zu lösen wären, betreffen die bis jetzt noch begrenzte Verbreitung der DTMF-Apparate und die mangelnde Bekanntheit des Kommunikationssystems, das zur Verbindung mit Sprechsystemen dient.

Hier will die Erfindung Abhilfe schaffen.

Die Erfindung, wie sie in den Ansprüchen gekennzeichnet ist, löst die Aufgabe eine Telephonvorrichtung zur Schallsendung von verschlüsselten Multifrequenztönen zu schaffen, mittels welcher es möglich ist, mit einem Datenverarbeiter mit alphanumerischen Typen (Computer oder ähnliches) zu vermitteln.

Die durch die Erfindung erreichten Vorteile bestehen hauptsächlich darin, daß es sich um eine Vorrichtung handelt, die von Firmen verwendet wird, die in Versandverkauf an ihre Kunden Verkaufskataloge oder Broschüren mit Warenlisten schicken, wie auch von Transportfirmen bei der automatischen Bestellung in Kundendienst alter, neuer oder momentaner Kunden; von Firmen verschiedenster Dienstleistungen (PKW-Vermietung mit oder ohne Chauffeur, Informationsvermittlung oder anderes), für die es wichtig ist 24 Stunden am Tag Bestellungen zu erhalten; von Fernseh - oder Radionetzen für Preisauschreiben; von Betrieben die im Bereich Handels- oder Massmedienforschung tätig sind; von Bankinstituten für die direkte Verwaltung des Bankkontos von seiten der Kunden und ähnliches.

Zu der Vorrichtung gehört erfindungsgemäß vor allen Dingen eine Protokolleinheit, und ein Telephongerät, das eine protokollgemäße Sprache spricht.

Festgesetzt, daß der Buchstabe "A" aus den Ziffern "0" und "1" zusammengesetzt wird, stellt sich das Sprechsystem, nach Abgabe der Telephonantwort, darauf ein, Paare von Multifrequenzsignalen zu erhalten, so daß es nach Empfang der Ziffer "0", die nächste erwartet; wenn es die Ziffer "1" erhält, liest es in der Speichereinheit, daß die Sequenz "0-1" dem Buchstaben "A" entspricht. Mit diesem System ist es möglich hundert verschiedene Kombinationen zu erhalten, was eine ausreichende Anzahl ist das ganze Alphabet zu verschlüsseln, und auch die wichtigsten Satzzeichen (Punkt, Komma, Doppelpunkt, Akzente, Apostroph, usw), zumal das Unterscheiden zwischen großen und kleinen Buchstaben nicht unbedingt nötig ist.

Paare von Multifrequenzsignalen stellen die Nummer dar, weil das Sprechsystem immer zwei Signale vor der Dekodierung der Töne erwartet; jede Nummer wird durch zwei gleiche Signale verschlüsselt, wobei jedes einzelne Signal die Nummer darstellt. Zum Beispiel der Nummer "1" entspricht die Sequenz "1-1", und der Nummer "2" entspricht die Sequenz "2-2". Die Sequenzen für die Nummer wenden zehn der hundert Kombinationen an.

Um diese Art von Kommunikation herzustellen, ist eine Telephonvorrichtung erfunden worden, die mit einer alphanumerischen Tastatur und mit einer Zifferntastatur ausgerüstet ist; vorteilhafterweise gehört dazu ein Lautstärker, der zur Lautverstärkung beim Abhören der Telephonlinie dient.

Die Telephonvorrichtung, die eine verschlüsselte Entsprechung zwischen alphanumerischen Typen und Multifrequenztönen herstellt, kann an jegliche Art von Telephonapparat integriert werden, so zum Beispiel ein Telephon, ein Zelltelephon, ein Personensucher, ein Fax (auch als integrierte Karte eines Personal-Computers), einen Antwortautmaten, einen Antworter, eine automatische Wartemitteilung, einen Modem (auch als integrierte Karte eines Personal-Computers) oder einen anderen Apparat, der zur Datensendung dient, einen Scrambler oder sonstiger Apparat der dazu dient, daß das Abhören der Schallsendung von seiten unbefugter Personen zu vermeiden, ein Video-Telephon, eine Touch-Screen-Tastatur, ein Stimmerkennungssystem jeglicher Art, ein Apparat für Telemedizin, Telediagnose und Erste-Hilfe-Leistung, eine kombinierte Multifunktionsapparatur, ein telephonischer Fernbediener, Anruferwiederholer (akustische, lichtsignalisierende oder ähnliche) und jedenfalls im Allgemeinen all das was an Telephonlinien (umschaltbare, direkte, gebündelt, materielle oder per Radio) oder an den öffentlichen Telephondienst verbunden werden kann.

Eine Tabelle die das Entsprechen zwischen Multifrequenztönen und alphanumerischen Typen herstellt, kann mittels einer definierten Anzahl von Tönen für jeden einzelnen Typ erhalten werden (im angeführten Beispiel sind die Töne zwei); oder aber die Tabelle kann so zusammengestellt werden, daß man nur einen einzigen Ton verwendet, dessen Dauer die Art des Typs definiert (Buchstabe, Nummer oder Zeichen).

Weitere Vorteile, Einzelheiten und erfindungswesentliche Merkmale ergeben sich aus der nachfolgenden Beschreibung einer bevorzugten Ausführungsform der Telephonvorrichtung gemäß der Erfindung, unter Bezugnahme auf die beigefügten Zeichnungen. Dabei gilt im einzelnen:
Abb.1 ist ein Blockdarstellung der Telephonvorrichtung gemäß der Erfindung;

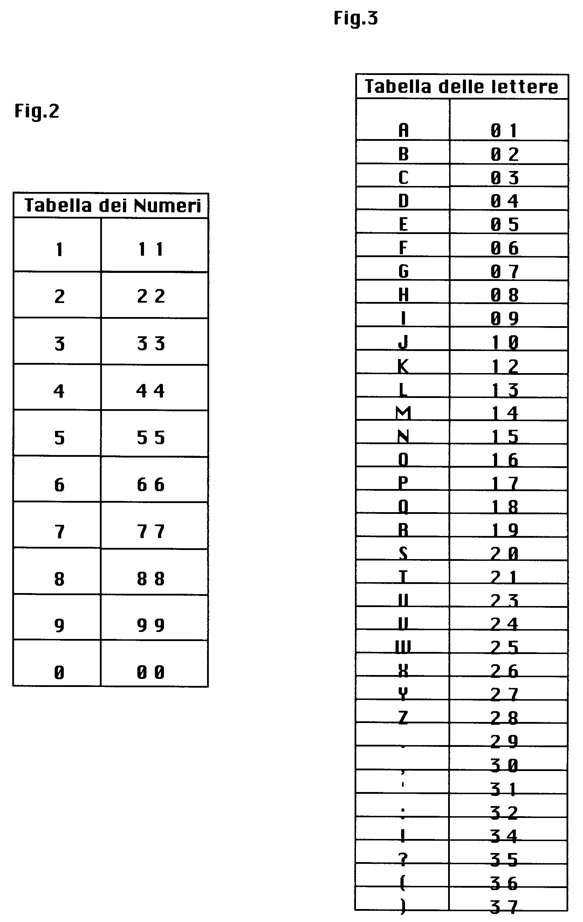

Abb.2 ist eine Koppelungstabelle Type/Töne für Nummern;
Abb.3 ist eine Koppelungstabelle Type/Töne für Buchstaben und weitere graphische Zeichen.

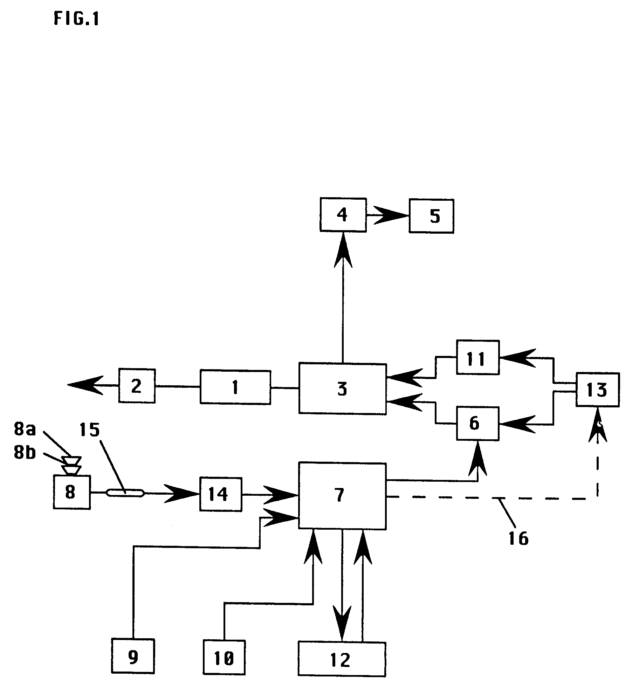

Zu der Telephonvorrichtung, die im Blockdarstellung von Abb.1 abgebildet ist, gehört, unter anderem, ein Schalter 1 mit zwei Stellungen, der als Telephongabel dient; der Schalter 1 ist mit der Linie des städtischen Telephonnetzes 2 und mit einem telephonischen Anpassungskreis 3 verbunden, der einen Ausgang an einen Lautverstärkungsskreis 4 angeschlossen hat; dieser ist vorzugsweise mit einem Lautstärker 5 verbunden; der telephonische Anpassungskreis 3 weist außerdem einen ersten Eingang auf, der mit einem Multifrequenztonsender 6 und einen zweiten Eingang, der mit einem Zehnerimpulssender 11 verbunden ist.

Eine zentrale Verarbeitungseinheit 7 besteht hauptsächlich aus einem Kreis, der dazu dient, die Signale zu verarbeiten, welche aus einer Ziffertastatur 9 und aus einer alphanumerischen Tastatur 10 kommen, woran die Einheit 7 angeschlossen ist. Ein Speicher 12 enthält die Tabellen der Ton/Typ - Paarungen und ist mit der zentrale Verarbeitungseinheit 7 verbunden; diese ist ihrerseits außerdem an einem Erkennungskreis 14 angeschlossen, der die Tonsendungsweise erkennt, wobei die erste Weise in der Wahl einer Telephonnummer besteht, und die zweite Weise in der verschlüsselten Tonsendung nach einem bestimmten Protokoll, das in den Tabellen von den Abbildern 2 und 3 dargestellt ist. Der Speicher 12 kann der Art ROM oder EPROM angehören.

Der Erkennungskreis 14 weist einen Eingang auf, der mit einem Schalter 8 verbunden ist, auf dem sich ein von Stellung 8a auf Stellung 8b und umgekehrt, verstellbarer Knopf befindet, der zum Umschalten von der ersten auf die zweite Position dient, außerdem ist ein Ausgang des Erkennungskreises 14 an der Verarbeitungseinheit 7 angeschlossen; hinzu kommt ein Lichtsignal 15, der das Umschalten von der ersten auf die zweite Sendungsweise anzeigt, wenn der Schalter 8 von der ersten auf die zweite Sendungsweise umschaltet oder sich im Zustand bereits erfolgter Umschaltung von der ersten auf die zweite Sendungsweise befindet, das heißt wenn der Knopf des Schalters 8 von Stellung 8a auf Stellung 8b geschaltet wird, oder auf Stellung 8b gelassen wird.

Wenn der Knopf des Schalters 8 sich auf Stellung 8a befindet, veranlasst der Erkennungskreis 14 die Verarbeitungseinheit 7, die aus der Ziffertastatur 10 kommenden Signale an einen Zehner-Multifrequenzschalter 13 zu senden und wenn der Knopf des Schalters 8 sich auf Stellung 8b befindet, veranlasst der Erkennungskreis 14 die Verarbeitungseinheit 7, die von den Tastaturen 9 und 10 stammenden Signale zu verarbeiten und dem Multifrequenztonsender 6 Signale zu senden, die auf denen beruhen die von den Tastaturen 9 und 10 herstammen. Zu diesem Zweck ist ein erster Ausgang der Verarbeitungseinheit 7 mit dem Multifrequenztonsender 6 verbunden, und ein zweiter Ausgang der Verarbeitungseinheit 7 ist mit dem Zehner-Multifrequenzschalter 13 verbunden, der dazu dient, die Vorrichtung an ein Netz mit Zehnertönen oder an ein Netz mit Multifrequenz anzuschließen.

Ein Ausgang des Zehner-Multifrequenzschalters 13 ist mit einem Eingang des Zehnerimpulssenders 11 verbunden, dessen Ausgang mit dem Eingang des Anpassungskreises 3 verbunden ist. Der Zehnerimpulssenders 11 dient dazu, die Vorrichtung an ein Netz mit Zehnertönen anzuschließen.

Das Funktionieren der erfindungsgemäßen Vorrichtung kann folgendermaßen erklärt werden:
Die Vorrichtung muß an die verschiedenen Arten von Telephonnetzen, an die sie Angeschlossen wird, angepasst werden. Zu diesem Zweck wird der Zehner-Multifrequenzschalter 13 angewendet, der es ermöglicht die Funktionierungsweise der Vorrichtung je nach Netzart zu wählen, das Netz kann Multifrequenzartig, oder Zehnertonartig sein.

Um eine gewünschte Nummer anzurufen, mit der ein wie oben beschriebener Datenverarbeiter verbunden ist, muß der Schalter 1 auf die Hörposition gestellt werden; das entspricht dem Heben eines gemeinen Telefonhörers; deshalb bewirkt die Betätigung des Schalters 1 die Verbindung der Vorrichtung mit Netz 2. Während der Anrufsphase wird der Knopf des Schalters 8 auf Stellung 8a gelassen. Um die Nummer zu wählen, wird die Ziffertastatur 10 gebraucht.

In der Anrufsphase ist die zentrale Verarbeitungseinheit 7 mit dem Zehner-Multifrequenzschalter 13 verbunden, und zwar mittels eines Leiters 16, der gestrichelt dargestellt ist. Je nach Netzart, an das die Vorrichtung angeschlossen ist, sendet der Zehner-Multifrequenzschalter 13 aus der Einheit 7 stammende Rufsignale an den Multifrequenztonsender 6 (für Netze mit Multifrequenz) oder an den Zehnerimpulssender 11 (für Netze mit Zehnertönen).

Nachdem die Kommunikation mit dem angerufenen Verarbeiter hergestellt ist, antwortet dessen Sprechsystem dem Rufer und gibt ihm die Anweisungen, wie auf Seiten 2 und 3 von 1. bis 8. aufgeführt. Um zu antworten, ist es nötig den Knopf des Schalters 8 auf der Stellung 8b zu lassen, damit die Einheit 7 die aus der alphanumerischen Tastatur 10 kommenden Signale verarbeitet (oder um die Ziffern der Tastatur 9 zu verarbeiten) und zwar nach einem Sendungsprotokoll von alphanumerischen Typen, das im Speicher 12 enthalten ist, und damit die verarbeiteten Signale an den Multifrequenztonsender 6 geschickt werden, der die durch die Verarbeitungseinheit 7 verarbeiteten Signale in entsprechenden Multifrequenztöne verändert.

So wie die Sendung der Mitteilungen beendet ist, wird der Schalter 1 wieder auf jene Stellung gebracht, welche mit dem Netz 2 unterbricht; diese Aktion entspricht dem Auflegen des Telefonhörers und ermöglicht daß der Knopf des Schalters 8 wieder auf die Stellung 8a zurückgestellt wird und somit wieder die nächtsten Anrufe bereit steht.

In einer hier nicht dargestellte Ausführungsform der Erfindung, ist der telephonische Anpassungskreis 3 an einem Anpassungskreis von einem Bildschirm verbunden, auf dem die von der Vorrichtung gesendeten oder empfangenen Typen erscheinen.

## Patentansprüche

1. Telephonvorrichtung zur Schallsendung von verschlüsselten Multifrequenztönen, zu der ein telephonischer Anpassungskreis (3) gehört, der an das Netzt (2) mittels eines Schalters (1) mit zwei Stellungen angeschlossen ist, und Mittel (4,5) zum Empfangen der Mitteilung, dadurch gekennzeichnet, daß ein Multifrequenztonsender (6) an einer zentralen, aus einem Kreis bestehenden Verarbeitungseinheit (7) angeschlossen ist, wobei dieser Kreis dazu dient, die Signale welche aus einer Ziffertastatur (9) und/oder aus einer alphanumerischen Tastatur (10) kommen, an denen die Einheit (7) angeschlossen ist, zu verarbeiten, um Signale zu erhalten, die von den Tastaturen (9,10) herkommenden Signalen beruhen, und welche nach einem Sendungsprotokoll alphanumerischer Typen verarbeitet werden, welches in einem an der Verarbeitungseinheit (7) angeschlossenen Speicher (12) enthaltenen; und um außerdem die verarbeiteten Signale an den Multifrequenztonsender (6) zu schicken, der diese Signale in entsprechende Multifrequenztöne verändert.

2. Telephonvorrichtung nach Anspruch 1, dadurch gekennzeichnet, daß ein Erkennungskreis (14) mit der Verarbeitungseinheit (7) verbunden ist; der Erkennungskreis (14) empfängt die Sendungsweise der Töne, wobei die erste Sendungsweise in der Wahl einer Telephonnummer besteht, und die zweite Sendungsweise in der verschlüsselten Tonsendung nach dem Sendungsprotokoll; der Erkennungskreis (14) ist mit einem Schalter (8) verbunden, der mit einem zweifach verstellbaren Knopf (8a,8b) ausgestattet ist, der zum Umschalten von einer ersten Stellung (8a), die der ersten Sendungsweise entspricht, auf eine zweite Stellung (8b), die der zweiten Sendungsweise entspricht, dient.

3. Telephonvorrichtung nach Anspruch 1, dadurch gekennzeichnet, daß ein Zehnerimpulssender (11) vorgesehen ist, der mit der Verarbeitungseinheit (7) mit dem in der zweiten Stellung (8b) sich befindenden Schalter (8) verbunden ist, und zwar mittels eines Multifrequenzton/Zehnerimpuls-Schalters (13).

4. Telephonvorrichtung nach Anspruch 1, dadurch gekennzeichnet, daß der telephonische Anpassungskreis (3) mit einem Lautverstärkungskreis (4) verbunden ist, der an einem Lautstärker (5) angeschlossen ist.

5. Telephonvorrichtung nach Anspruch 1, dadurch gekennzeichnet, daß der telephonische Anpassungskreis (3) an einem Anpassungskreis von einem Bildschirm verbunden ist, auf dem die von der Vorrichtung gesendeten oder empfangenen Typen erscheinen.

6. Telephonvorrichtung nach Anspruch 1, dadurch gekennzeichnet, daß das Sendungsprotokoll, das im Speicher (12) enthalten ist, durch Kombinationen von Ziffern in Sequenz erhalten wird.

7. Telephonvorrichtung nach Anspruch 6, dadurch gekennzeichnet, daß das Sendungsprotokoll durch Kombinationen von zwei Ziffern in Sequenz erhalten wird.

8. Telephonvorrichtung nach Anspruch 1, dadurch gekennzeichnet, daß das Sendungsprotokoll durch einen einzigen Ton erhalten wird, dessen Dauer die Art des Typs definiert.

9. Telephonvorrichtung nach Anspruch 1, dadurch gekennzeichnet, daß der Speicher (12) ein Permanentspeicher (ROM oder EPROM) ist.

10. Telephonvorrichtung nach Anspruch 1, dadurch gekennzeichnet, daß ein Lichtsignal (15) vorgesehen ist, der das Umschalten von der ersten auf die zweite Sendungsweise anzeigt, wenn der Knopf des Schalters (8) von Stellung (8a) auf Stellung (8b) geschaltet wird, oder auf Stellung (8b) gelassen wird.
